# EUROPÄISCHE PATENTSCHRIFT

(11) **EP 3 609 595 B1**
(45) Veröffentlichungstag und Bekanntmachung des Hinweises auf die Patenterteilung: **24.02.2021**
(21) Anmeldenummer: 18712862.4
(22) Anmeldetag: 19.03.2018
(51) Int. Cl.: B01D 29/21, B01D 29/96

(54) **VORRICHTUNG ZUM AUSTAUSCHEN EINES FILTERELEMENTS**
DEVICE FOR REPLACING A FILTER ELEMENT
DISPOSITIF SERVANT À REMPLACER UN ÉLÉMENT FILTRANT

(30) Priorität: 12.04.2017 DE 102017003578
(43) Veröffentlichungstag der Anmeldung: 19.02.2020
(73) Patentinhaber: HYDAC FluidCareCenter GmbH, 66280 Sulzbach/Saar (DE)
(72) Erfinder: SCHOLL, Thomas, 66740 Saarlouis (DE); EBERLE, Richard, 66399 Ormesheim (DE)
(74) Vertreter: Bartels und Partner, Patentanwälte
(86) Internationale Anmeldenummer: PCT/EP2018/056906
(87) Internationale Veröffentlichungsnummer: WO 2018/188904

(56) Entgegenhaltungen:
- US-A1- 2004 256 308
- US-A1- 2015 202 556

## Beschreibung

Die Erfindung betrifft eine Vorrichtung zum Austauschen eines in einem Gehäusetopf zumindest teilweise aufgenommenen, insbesondere verbrauchten Alt-Filterelements, gegen ein in diesen Gehäusetopf einzuwechselndes, insbesondere unverbrauchtes Neu-Filterelement, vorzugsweise gleicher Bauart, mit den Merkmalen im Oberbegriff des Anspruchs 1.

In Anlagen, die mit Betriebsfluiden, wie Hydraulikflüssigkeiten, Kühlschmiermitteln, Kraftstoffen, Schmierölen oder dergleichen, arbeiten, sind Filtervorrichtungen, die auswechselbare Filterelemente aufweisen, Stand der Technik, siehe beispielsweise DE 10 2013 011 865 A1. Die Filtervorrichtungen bilden bei diesen Anwendungen wichtige Systembestandteile, weil Betriebsstörungen oder gar Ausfälle der Filtervorrichtungen zu Beschädigungen oder der Zerstörung nachgeordneter Systeme führen können, was wirtschaftliche Schäden verursacht. Aufgrund der der Betriebssicherheit zukommenden großen Bedeutung ist es daher unerlässlich, die Filtervorrichtungen sorgfältig zu warten. Eine der wichtigsten Wartungsmaßnahmen ist die bedarfsgerechte Auswechslung von Filterelementen, um sicherzustellen, dass verbrauchte Alt-Filterelemente rechtzeitig durch unverbrauchte Neu-Filterelemente ersetzt werden. Bei im Filtergehäuse eingebauten Filterelementen gestaltet sich der Austausch verhältnismäßig umständlich und dementsprechend zeit- und arbeitsaufwändig.

Die US 2015/0202556 A1 offenbart eine Vorrichtung zum Austauschen eines in einem Gehäusetopf zumindest teilweise aufgenommenen, insbesondere verbrauchten Alt-Filterelements, gegen ein in diesen Gehäusetopf einzuwechselndes, insbesondere unverbrauchtes Neu-Filterelement, vorzugsweise gleicher Bauart, mit einem Gehäusetopf und einem Filterelement, das ein sich zwischen zwei Endkappen erstreckendes Filtermaterial aufweist, von denen eine Endkappe eine Handhabe aufweist zum Einwechseln des Filterelements in den Gehäusetopf in eine Funktionsposition, wobei an der freien Stirnseite des Gehäusetopfes eine Steuereinrichtung vorhanden ist, die mit mindestens einem an der die Handhabe aufweisenden Endkappe vorhandenen Steuermittel derart zusammenwirkt, dass bei Drehen des jeweiligen Filterelements mittels der Handhabe in einer Richtung aus einer Festlegestellung im Gehäusetopf heraus eine axial wirkende Auszugskraft auf dieses Filterelement wirkt, die zumindest teilweise das Ausheben des Filterelements aus dem Gehäusetopf bewirkt, wobei die Steuereinrichtung ein Sägezahnprofil aufweist, dessen einzelne Zähne jeweils ausgehend von einem Zahngrund eine schräg in Richtung der Umgebung verlaufende Rampe ausbilden, an deren Ende die Rampe unter Bildung einer Anlagefläche in den innerhalb des Sägezahnprofils nachfolgenden Zahngrund abfällt, und wobei das Sägezahnprofil einen in sich geschlossenen Ring ausbildet.

Die US 2004/0256308 A1 beschreibt ein Fluidfiltersystem.

Der Erfindung liegt die Aufgabe zugrunde, eine Vorrichtung zur Verfügung zu stellen, die den Auswechselvorgang von Filterelementen erleichtert.

Erfindungsgemäß ist diese Aufgabe durch eine Vorrichtung gelöst, die die Merkmale des Patentanspruchs 1 in seiner Gesamtheit aufweist.

Gemäß seinem kennzeichnenden Teil ist der Anspruch 1 dadurch gekennzeichnet, dass bei dem Ring die einzelnen Rampen, ausgehend von ihrem jeweiligen Zahngrund, nahtlos und abstandsfrei ineinander übergehen.

Bei dieser Anordnung von über den gesamten Umfang ineinander übergehenden Rampen entsteht die gewünschte Auszugskraft beim Verdrehen des Filterelements, unabhängig davon, in welcher Ausgangs-Drehposition sich das Filterelement befindet.

Ferner ist vorgesehen, dass an der freien Stirnseite des Gehäusetopfes eine Steuereinrichtung vorhanden ist, die mit mindestens einem an der die Handhabe aufweisenden Endkappe vorhandenen Steuermittel derart zusammenwirkt, dass bei Drehen des jeweiligen Filterelements mittels der Handhabe in einer Richtung aus einer Festlegestellung im Gehäusetopf heraus eine axial wirkende Auszugkraft auf dieses Filterelement wirkt, die zumindest teilweise das Ausheben des Filterelements aus dem Gehäusetopf bewirkt. Auf bequeme und einfache Weise gelangt dadurch das Filterelement durch eine Drehbewegung in eine aus dem Gehäusetopf vorstehende, leicht ergreifbare Position, wobei gleichzeitig die Haltekraft überwunden ist, mit der Filterelemente üblicherweise in der Funktionsposition in einem Sitz der jeweiligen Elementaufnahme kraftschlüssig gehalten sind.

Vorteilhafterweise ist das Sägezahnprofil aus gleich ausgebildeten Rampen mit gleicher Steigung und gleicher Rampenhöhe gebildet.

Mit Vorteil ist die Anordnung so getroffen, dass die eine Endkappe mit der Handhabe auf ihren einander diametral gegenüberliegenden Seiten jeweils ein Steuermittel aufweist, das über den Umfangsrand mit einem vorgebbaren Überstand vorspringt. Dadurch, dass die Auszugskraft so am Filterelement auf zwei zueinander diametral gegenüberliegenden Stellen wirkt, erfolgt das Ausheben ohne Verkanten. Es besteht ferner die Möglichkeit, aber auch vier oder eine weitere gerade Anzahl von Steuermitteln anzubringen, welche vorzugsweise diametral auf gegenüberliegenden Seiten vorhanden sind. Ferner ist es möglich eine ungerade Anzahl von Steuermitteln vorzusehen bspw. von drei Steuermitteln, die mit gleichem radialen Abstand zueinander umfangseitig angebracht sind. In einer weiteren komplexen Ausführung wäre es auch denkbar, genauso viele Steuermittel wie vorhandene Rampen vorzusehen. Des Weiteren besteht die Möglichkeit ein Steuermittel für jede Rampe vorzusehen und dann einen Abstand von einer oder mehreren Rampen vorzusehen, bevor wiederum ein Steuermittel für eine Rampe zum Einsatz kommt. In Abhängigkeit von der Baugröße kann eventuell auch nur ein Steuermittel zum Einsatz kommen.

Bei vorteilhaften Ausführungsbeispielen weist das jeweilige Steuermittel auf seiner dem Sägezahnprofil zugewandten Unterseite eine Führungsfläche mit einer Neigung auf, die der Neigung der jeweiligen schräg verlaufenden Rampe entspricht. Beim Verdrehen des Filterelements sind die Steuermittel dadurch in Flächenberührung an der betreffenden Rampe geführt.

Mit Vorteil kann die Anordnung so getroffen sein, dass im vollständig eingesetzten Zustand des jeweiligen Filterelements im Gehäusetopf das jeweilige Steuermittel der einen Endkappe sich an der sich an den Zahngrund anschließenden Anlagefläche und an der zugehörigen Rampe des Sägezahnprofils abstützt. In der Funktionsposition ist dadurch das Filterelement in der einen Drehrichtung durch Anlage des jeweiligen Steuermittels an der Anlagefläche formschlüssig und in der anderen Richtung durch das für die Erzeugung der Auszugskraft erforderliche Drehmoment gesichert.

Vorzugsweise verläuft die jeweilige Anlagefläche des Sägezahnprofils parallel zur Auszugsrichtung des jeweiligen Filterelements am Gehäusetopf, wobei die axiale Höhe der Anlagefläche mit Vorteil so gewählt ist, dass bei vollständig im Gehäusetopf eingesetztem Filterelement die Oberseite des jeweiligen Steuermittels im Wesentlichen bündig mit dem oberen Ende der Anlagefläche an der Stelle des Übergangs zur nächsten Profilflanke abschließt.

Hinsichtlich der Aufnahme des Filterelements im Gehäusetopf kann die Anordnung mit besonderem Vorteil so getroffen sein, dass an der anderen Endkappe des Filterelements außenumfangsseitig eine Dichteinrichtung angebracht ist, die im eingesetzten Zustand des Filterelements in dichte Anlage mit dem Gehäusetopf kommt.

Die Dichteinrichtung kann an einem stutzenartigen Vorsprung der anderen Endkappe angeordnet sein, wobei dieser Vorsprung im eingesetzten Zustand des Filterelements in ein im Durchmesser gegenüber dem Durchmesser des sonstigen Gehäusetopfes verjüngtes Abschlussteil eingreift.

Bei einer derart ausgebildeten Aufnahme für das Filterelement im Gehäusetopf ist die Rampenhöhe des Sägezahnprofils mit Vorteil derart gewählt, dass bei der Aushebebewegung des Filterelements die Dichteinrichtung der anderen Endkappe im Wesentlichen außer Eingriff mit dem Gehäusetopf kommt. Das Verdrehen des Filterelements beim Filterelementwechsel führt dadurch zum Losbrechen der Dichteinrichtung durch Überwindung der durch Kraftschluss im Dichtsitz wirkenden Haltekraft und zur Freigabe des Filterelements zur Entnahme aus dem Gehäusetopf.

Die Handhabe kann durch einen an der einen Endkappe schwenkbar angebrachten, von Hand betätigbaren Bügel gebildet sein, der mit seinen beiden freien Enden in Schwenkaufnahmen in den beiden gegenüberliegenden Steuermitteln geführt ist. Dabei kann die Anordnung mit Vorteil so getroffen sein, dass im unbetätigten Zustand der Bügel auf die Oberseite der Endkappe geschwenkt ist und unterhalb einer Ebene zu liegen kommt, die von den Oberseiten der beiden Steuermittel gemeinsam aufgespannt ist. Da die Handhabe somit keinen axialen Überstand über die Ebene des Steuersystems ausbildet, bildet die Handhabe kein Hindernis für die Gestaltung eines den Gehäusetopf nach oben abschließenden Kopfteils.

Zur Bildung einer dem Filterelement zugehörigen Fluidführung kann die Endkappe mit dem Bügel als Handhabe einen stutzenartigen Fortsatz aufweisen, der außenumfangsseitig eine weitere Dichteinrichtung trägt, wobei in jeder Schwenkstellung des Bügels der Fortsatz berührungsfrei von diesem gehalten ist. Der Bügel bildet dadurch auch kein Hindernis für die Ausbildung eines abgedichteten Fluidanschlusses am stutzenartigen Fortsatz der Endkappe.

Bei vorteilhaften Ausführungsbeispielen schließt sich das Sägezahnprofil stegartig und einstückig an das freie Ende des Gehäusetopfes an, das nachfolgend ein Außengewinde aufweist, über das sich ein Kopfteil des Gehäuses schraubend am Gehäusetopf festlegen lässt.

Damit die Verschraubung ohne Behinderung durch das Steuersystem ausbildbar ist, kann die Stegbreite des Sägezahnprofils derart gewählt sein, dass in jeder Festlegestellung des Filterelements im Gehäusetopf die Steuermittel an dessen Endkappe, in radialer Richtung gesehen, keinen Überstand aufweisen.

Nachstehend ist die Erfindung anhand eines in der Zeichnung dargestellten Ausführungsbeispiels im Einzelnen erläutert. Es zeigen:
- Fig. 1: vom Ausführungsbeispiel der erfindungsgemäßen Vorrichtung in perspektivischer Schrägansicht den Gehäusetopf eines im Übrigen nicht dargestellten Filtergehäuses mit in den Gehäusetopf in Funktionsposition eingesetztem Filterelement;
- Fig. 2: einen vergrößert und abgebrochen gezeichneten Teillängsschnitt des Bodenbereichs des Gehäusetopfes mit in Funktionsposition befindlichem Filterelement;
- Fig. 3: eine der Fig. 1 entsprechende perspektivische Schrägansicht, wobei das Filterelement in teilweise aus dem Gehäusetopf ausgehobener Position dargestellt ist; und
- Fig. 4: einen der Fig. 2 entsprechenden Teillängsschnitt mit teilweise ausgehobenem Filterelement.

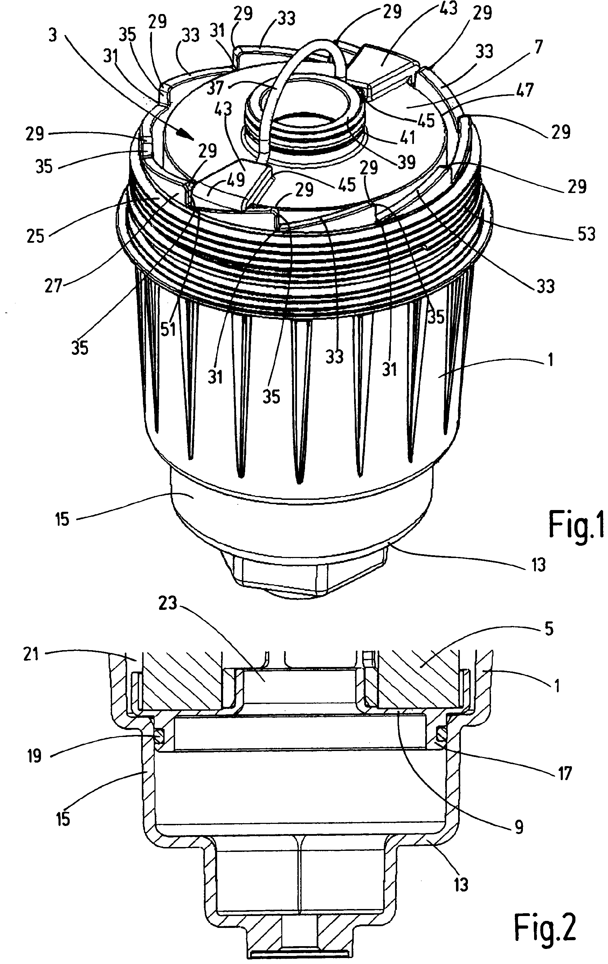

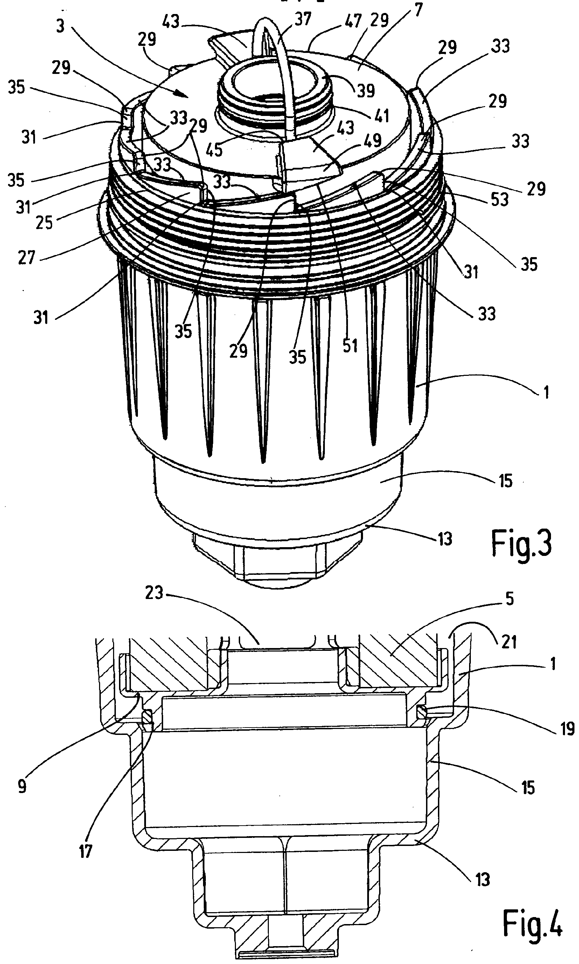

In den beigefügten Zeichnungen ist von einer Filtervorrichtung, die mit einem Ausführungsbeispiel der erfindungsgemäßen Austauschvorrichtung versehen ist, lediglich ein Gehäusetopf 1 mit einem in diesem austauschbar aufnehmbaren Filterelement 3 dargestellt, wobei ein mit dem oberen, offenen Ende des Gehäusetopfes 1 verschraubbarer Gehäusedeckel oder -kopf weggelassen ist. Das Filterelement 3 weist ein Filtermaterial 5 auf (Fig. 2 und 4), das in der bei Filterelementen üblichen Weise die Form eines Hohlzylinders besitzt, dessen axialen Enden jeweils durch eine Endkappe eingefasst sind, von denen die in der Zeichnung obenliegende Endkappe mit 7 und die untere Endkappe mit 9 bezeichnet ist. Der Gehäusetopf 1 ist an seinem unteren Ende durch ein Bodenteil 13 geschlossen, das ein kreiszylindrisches Abschlussteil 15 aufweist, dessen Durchmesser gegenüber dem Durchmesser des sich nach oben hin anschließenden Gehäusetopfes 1 verjüngt ist. Mit seinem oberen Endbereich bildet das Abschlussteil 15 die Elementaufnahme für das Filterelement 3. Wie die Fig. 2 zeigt, weist die untere Endkappe 9 einen koaxialen, nach unten vorstehenden stutzenartigen Vorsprung 17 auf, an dem außenumfangsseitig eine Dichteinrichtung 19 angebracht ist. Bei der in Fig. 1 und 2 gezeigten Funktionsposition des Filterelements 3 greift der stutzenartige Vorsprung 17 in den oberen Endbereich des Abschlussteils 15 ein, das einen Dichtsitz für die Dichteinrichtung 19 bildet. Dadurch ist der an der Außenseite des Filtermaterials 5 befindliche Raum 21 im Gehäusetopf 1 gegenüber dem vom Filtermaterial 5 umgebenen inneren Filterhohlraum 23 abgedichtet, der beim Filtervorgang, wenn das Filtermaterial 5 von außen nach innen durchströmt ist, die Filtratseite bildet.

Die Steuereinrichtung für die erfindungsgemäße Austauschvorrichtung ist am freien, oberen offenen Ende des Gehäusetopfes 1 ausgebildet. Wie die Fig. 1 und 3 zeigen, ist hierfür ein vom Öffnungsrand 25 axial vorstehender Steuerring in Form eines Sägezahnprofils 27 vorgesehen. Wie gezeigt, gehen die Zähne 29 zur Bildung eines geschlossenen Steuerringes abstandsfrei ineinander über und weisen, jeweils von einem Zahngrund 31 ausgehend, eine schräg nach oben verlaufende Rampe 33 auf. Zwischen den Zahnspitzen am oberen Ende der Rampen 33 fallen die Zähne 29 mit einer Anlagefläche 35 zum Zahngrund 31 hin ab. Diese Anlageflächen 35 liegen in einer zur Auszugsrichtung des Filterelements 3 parallel verlaufenden Ebene. Die mit dem den Steuerring bildenden Sägezahnprofil 27 zusammenwirkenden Steuermittel befinden sich an der oberen Endkappe 7 des Filterelements 3, an der sich eine Handhabe in Form eines schwenkbaren Bügels 37 befindet. Die obere Endkappe 7 weist einen koaxialen, stutzenartigen, nach oben vorstehenden Fortsatz 39 auf, der einen zum inneren Filterhohlraum 23 führenden Fluidanschluss bildet und außenumfangsseitig eine weitere Dichteinrichtung 41 trägt. Als mit dem Sägezahnprofil 27 zusammenwirkende Steuermittel sind an der Oberseite der Endkappe 7 zwei Steuerblöcke 43 vorgesehen, die zueinander diametral gegenüberliegend an der Oberseite der Endkappe 7 angeordnet sind. Die einander zugewandten, radial inneren Enden 45 der Steuerblöcke 43 befinden sich jeweils in einem Abstand vom zentral gelegenen Fortsatz 39. An diesen inneren Enden 45 der Steuerblöcke 43 ist der die Handhabe bildende Bügel 37 mit seinen Enden schwenkbar gelagert, so dass er aus der in den Fig. 1 und 3 gezeigten, hochgeklappten Stellung an die Oberseite der Endkappe 7 anklappbar ist, wobei er einen Radius beschreibt, der größer ist als der Radius des Fortsatzes 39, so dass sich der eingeklappte Bügel 37 in einem Abstand vom Fortsatz 39 befindet. An seinem radial außenliegenden Ende übergreift jeder Steuerblock 43 den Umfangsrand 47 der Endkappe 7 mit einem Steuerteil 49, das an seiner Unterseite eine für die Zusammenwirkung mit dem Sägezahnprofil 27 vorgesehene Führungsfläche 51 aufweist. Diese besitzt eine Neigung, die der Neigung der schrägen Rampe 33 des Sägezahnprofils 27 entspricht. Der radiale Überstand der Steuerblöcke 43 über den Umfangsrand 47 ist so bemessen, dass er der Stegbreite der Zähne 29 entspricht, so dass die Steuerblöcke 43 keinen radialen Überstand über den Kranz des Sägezahnprofils 27 bilden. Die axiale Höhe der Steuerblöcke 43 ist so bemessen, dass bei voll in die Funktionsposition eingebautem Filterelement 3, wie es in Fig. 1 dargestellt ist, auch kein axialer Überstand der Blöcke 43 über die Spitze der Zähne 29 gebildet ist. Bei dieser Funktionsposition liegen die Steuerblöcke 43 mit dem einen Ende der Führungsfläche 51 an der Anlagefläche 35 des betreffenden Zahnes 29 an.

Wie die Fig. 1 und 3 zeigen, schließt sich am Öffnungsrand 25 des Gehäusetopfes 1 unterhalb des Sägezahnprofils 27 ein Außengewinde 53 an, mit dem ein nicht dargestellter Gehäusedeckel oder -kopf verschraubbar ist, der den oberen Gehäuseabschluss bildet und mit Fluidführungen versehen ist, über die Unfiltrat zu dem die Unfiltratseite bildenden Raum 21 zuführbar und Filtrat über den Fortsatz 39 aus dem inneren Filterhohlraum 23 abführbar ist. Zur Betätigung der Vorrichtung ist das Filterelement 3 mittels des eine Handhabe bildenden Bügels 37 entgegen dem Uhrzeigersinn aus der in Fig. 1 gezeigten Drehstellung in die in Fig. 3 gezeigte Stellung verdrehbar. Das Auflaufen der Führungsfläche 51 der Steuerblöcke 43 über die Rampen 33 der Zähne 29 des Sägezahnprofils 27 erzeugt dabei einen axialen Hub des Filterelements 3 in Ausziehrichtung, bei dem der Dichtsitz der Dichteinrichtung 19 der unteren Endkappe 9 losgebrochen und das Filterelement 3 aus der in Fig. 2 gezeigten Position in die in Fig. 4 gezeigte Position übergeführt wird, bei der sich die Dichteinrichtung 19 in aus dem Abschlussteil 15 ausgehobener Position befindet. Das Filterelement 3 ist somit frei und kann mühelos mittels des Bügels 37 aus dem Gehäusetopf 1 ausgehoben werden.

## Patentansprüche

1. Vorrichtung zum Austauschen eines in einem Gehäusetopf (1) zumindest teilweise aufgenommenen, insbesondere verbrauchten Alt-Filterelements (3), gegen ein in diesen Gehäusetopf (1) einzuwechselndes, insbesondere unverbrauchtes Neu-Filterelement (3), vorzugsweise gleicher Bauart, mit einem Gehäusetopf (1) und einem Filterelement (3), das ein sich zwischen zwei Endkappen (7, 9) erstreckendes Filtermaterial (5) aufweist, von denen eine Endkappe (7) eine Handhabe (37) aufweist zum Einwechseln des Filterelements (3) in den Gehäusetopf (1) in eine Funktionsposition, wobei an der freien Stirnseite des Gehäusetopfes (1) eine Steuereinrichtung (27) vorhanden ist, die mit mindestens einem an der die Handhabe (37) aufweisenden Endkappe (7) vorhandenen Steuermittel (43) derart zusammenwirkt, dass bei Drehen des jeweiligen Filterelements (3) mittels der Handhabe (37) in einer Richtung aus einer Festlegestellung im Gehäusetopf (1) heraus eine axial wirkende Auszugskraft auf dieses Filterelement (3) wirkt, die zumindest teilweise das Ausheben des Filterelements (3) aus dem Gehäusetopf (1) bewirkt, wobei die Steuereinrichtung ein Sägezahnprofil (27) aufweist, dessen einzelne Zähne (29) jeweils ausgehend von einem Zahngrund (31) eine schräg in Richtung der Umgebung verlaufende Rampe (33) ausbilden, an deren Ende die Rampe (33) unter Bildung einer Anlagefläche (35) in den innerhalb des Sägezahnprofils (27) nachfolgenden Zahngrund (31) abfällt, und wobei das Sägezahnprofil (27) einen in sich geschlossenen Ring ausbildet, **dadurch gekennzeichnet, dass** bei dem Ring die einzelnen Rampen (33), ausgehend von ihrem jeweiligen Zahngrund (31), nahtlos und abstandsfrei ineinander übergehen.

2. Vorrichtung nach Anspruch 1 oder 2, **dadurch gekennzeichnet, dass** das Sägezahnprofil (27) gleich ausgebildete Rampen (33) mit gleicher Steigung und gleicher Rampenhöhe ausbildet.

3. Vorrichtung nach einem der vorstehenden Ansprüche, **dadurch gekennzeichnet, dass** die eine Endkappe (7) mit der Handhabe (37) auf ihren einander diametral gegenüberliegenden Seiten jeweils ein Steuermittel (43) aufweist, das über den Umfangsrand (47) mit einem vorgebbaren Überstand vorspringt.

4. Vorrichtung nach einem der vorstehenden Ansprüche, **dadurch gekennzeichnet, dass** das jeweilige Steuermittel (43) auf seiner dem Sägezahnprofil (27) zugewandten Unterseite eine Führungsfläche (51) mit einer Neigung aufweist, die der Neigung der jeweiligen schrägverlaufenden Rampe (33) entspricht.

5. Vorrichtung nach einem der vorstehenden Ansprüche, **dadurch gekennzeichnet, dass** im vollständig eingesetzten Zustand des jeweiligen Filterelements (3) im Gehäusetopf (1) das jeweilige Steuermittel (43) der einen Endkappe (7) sich an der sich an den Zahngrund (31) anschließenden Anlagefläche (35) und an der zugehörigen Rampe (33) des Sägezahnprofils (27) abstützt.

6. Vorrichtung nach einem der vorstehenden Ansprüche, **dadurch gekennzeichnet, dass** die jeweilige Anlagefläche (35) des Sägezahnprofils (27) parallel zur Auszugsrichtung des jeweiligen Filterelements (3) an dem Gehäusetopf (1) verläuft.

7. Vorrichtung nach einem der vorstehenden Ansprüche, **dadurch gekennzeichnet, dass** bei vollständig im Gehäusetopf (1) eingesetztem Filterelement (3) die Oberseite des jeweiligen Steuermittels (43) im Wesentlichen bündig mit dem oberen Ende der Anlagefläche (35) an der Stelle des Übergangs zu der nächsten Profilflanke abschließt.

8. Vorrichtung nach einem der vorstehenden Ansprüche, **dadurch gekennzeichnet, dass** an der anderen Endkappe (9) des Filterelements (3) außenumfangsseitig eine Dichteinrichtung (19) angebracht ist, die im eingesetzten Zustand des Filterelements (3) in dichte Anlage mit dem Gehäusetopf (1) kommt.

9. Vorrichtung nach Anspruch 8, **dadurch gekennzeichnet, dass** die Dichteinrichtung (19) an einem stutzenartigen Vorsprung (17) der anderen Endkappe (9) angeordnet ist und dass dieser Vorsprung (17) im eingesetzten Zustand des Filterelements (3) in ein im Durchmesser gegenüber dem Durchmesser des sonstigen Gehäusetopfes (1) verjüngtes Abschlussteil (15) eingreift.

10. Vorrichtung nach Anspruch 8 oder 9, **dadurch gekennzeichnet, dass** die Rampenhöhe des Sägezahnprofils (27) derart gewählt ist, dass bei der Aushebebewegung des Filterelements (3) die Dichteinrichtung (19) der anderen Endkappe (9) im Wesentlichen außer Eingriff mit dem Gehäusetopf (1) kommt.

11. Vorrichtung nach einem der vorstehenden Ansprüche, **dadurch gekennzeichnet, dass** die Handhabe an der einen Endkappe (7) ein schwenkbarer, von Hand betätigbarer Bügel (37) ist, der mit seinen beiden freien Enden in Schwenkaufnahmen in den beiden gegenüberliegenden Steuermitteln (43) geführt ist.

12. Vorrichtung nach Anspruch 11, **dadurch gekennzeichnet, dass** im unbetätigten Zustand der Bügel (37) auf die Oberseite der Endkappe (7) geschwenkt ist und unterhalb einer Ebene zu liegen kommt, die von den Oberseiten der beiden Steuermittel (43) gemeinsam aufgespannt ist.

13. Vorrichtung nach Anspruch 11 oder 12, **dadurch gekennzeichnet, dass** die Endkappe (7) mit dem Bügel (37) als Handhabe einen stutzenartigen Fortsatz (39) aufweist, der außenumfangsseitig eine weitere Dichteinrichtung (41) trägt, und dass in jeder Schwenkstellung des Bügels (37) der Fortsatz (39) berührungsfrei von diesem gehalten ist.

14. Vorrichtung nach einem der vorstehenden Ansprüche, **dadurch gekennzeichnet, dass** das Sägezahnprofil (27) sich stegartig und einstückig an das freie Ende des Gehäusetopfes (1) anschließt, das nachfolgend ein Außengewinde (53) aufweist, über das sich ein Kopfteil des Gehäuses schraubend am Gehäusetopf (1) festlegen lässt.

15. Vorrichtung nach einem der vorstehenden Ansprüche, **dadurch gekennzeichnet, dass** die Stegbreite des Sägezahnprofils (27) derart gewählt ist, dass in jeder Festlegestellung des Filterelements (3) im Gehäusetopf (1) die Steuermittel (43) an dessen Endkappe (7), in radialer Richtung gesehen, keinen Überstand aufweisen.

## Claims

1. Device for exchanging an old filter element (3), particularly a used filter element, which is at least partially received in a housing pot (1), with a new, particularly unused, filter element (3), preferably of the same design, to be inserted in said housing pot (1, with a housing pot (1) and a filter element (3), which comprises a filter material (5) extending between two end caps (7, 9), one (7) of said end caps comprising a handle (37) for inserting the filter element (3) into the housing pot (1) into a functional position, a control apparatus (27) being provided on the free end face of the housing pot (1), said control apparatus interacting with at least one control means (43) present on the end cap (7) comprising the handle (37) such that, when the respective filter element (3) is turned by means of the handle (37) in a direction from a fixing position in the housing pot (1), an axial extraction force acts on this filter element (3), which at least partially causes the filter element (3) to lift out of the housing part (1), the control apparatus comprising a saw tooth profile (27), the individual teeth (29) of which each form a ramp (33) running obliquely in the direction of the surrounding area starting from a tooth base (31), at the end of which the ramp (33) falls off, forming a contact surface (35) in the following tooth base (31) inside the saw tooth profile (27), the saw tooth profile (27) also forming a closed ring, **characterised in that** the individual ramps (33) in the ring transition seamlessly and without any spaces into one another starting from their respective tooth base (31).

2. Device according to either claim 1 or claim 2, **characterised in that** the saw tooth profile (27) forms ramps (33) with the same shape, the same pitch and the same ramp height.

3. Device according to any one of the preceding claims, **characterised in that** the end cap (7) with the handle (37) comprises a control means (43) on each of its diametrically opposite sides, said control means protruding above the peripheral edge (47) with a pre-definable overhang.

4. Device according to any one of the preceding claims, **characterised in that** the respective control means (43) comprises a guide surface (51) with a slope on its underside facing the saw tooth profile (27) which corresponds to the slope of the respective obliquely extending ramp (33).

5. Device according to any one of the preceding claims, **characterised in that**, when the respective filter element (3) is in the fully inserted state in the housing pot (1), the respective control means (43) of the one end cap (7) is supported on the contact surface (35) adjacent to the tooth base (31) and on the associated ramp (33) of the saw tooth profile (27).

6. Device according to any one of the preceding claims, **characterised in that** the respective contact surface (35) of the saw tooth profile (27) runs in parallel with the extraction direction of the respective filter element (3) on the housing pot (1).

7. Device according to any one of the preceding claims, **characterised in that**, when the filter element (3) is fully inserted in the housing pot (1), the upper side of the respective control means (43) ends substantially flush with the upper end of the contact surface (35) at the point of transition to the next profile flank.

8. Device according to any one of the preceding claims, **characterised in that** a sealing apparatus (19) is attached to the outer circumference of the other end cap (9) of the filter element (3), said sealing apparatus coming into sealing contact with the housing pot (1) when the filter element (3) is in the inserted state.

9. Device according to claim 8, **characterised in that** the sealing apparatus (19) is arranged on a nozzle-like protrusion (17) on the other end cap (9) and **in that**, when the filter element (3) is in the inserted state, this protrusion (17) engages in an end portion (15) which has a tapered diameter compared to the diameter of the rest of the housing pot (1).

10. Device according to either claim 8 or claim 9, **characterised in that** the height of the ramp of the saw tooth profile (27) is selected such that the sealing apparatus (19) for the other end cap (9) substantially disengages from the housing pot (1) during the movement to lift out the filter element (3).

11. Device according to any one of the preceding claims, **characterised in that** the handle on the one end cap (7) is a pivotable strap (37) which can be actuated manually and is guided with its two free ends in pivoting mounts in the two opposite control means (43).

12. Device according to claim 11, **characterised in that**, in the unactuated state, the strap (37) is pivoted on the upper side of the end cap (7) and lies beneath a level which is jointly spanned by the upper sides of the two control means (43).

13. Device according to either claim 11 or claim 12, **characterised in that** the end cap (7) with the strap (37) as a handle comprises a nozzle-like extension (39), which bears a further sealing apparatus (41) on its outer circumference, and **in that**, in each pivot position of the strap (37), the extension (39) is held in a contact-free manner by the latter.

14. Device according to any one of the preceding claims, **characterised in that** the saw tooth profile (27) is connected in a web-like manner and in one piece to the free end of the housing pot (1), which subsequently comprises an outer thread (53), by means of which a top portion of the housing can be fixed to the housing pot (1) by screwing.

15. Device according to any one of the preceding claims, **characterised in that** the web width of the saw tooth profile (27) is selected such that, in any fixing position of the filter element (3) in the housing pot (1), the control means (43) does not have an overhang at its end cap (7) when viewed in the radial direction.

## Revendications

1. Dispositif pour remplacer un élément (3) de filtre vieux, notamment usagé, logé au moins en partie dans un pot (1) d'enveloppe, par un élément (3) de filtre nouveau, notamment non usagé, de préférence de même type de construction, à mettre en remplacement dans ce pot (1) d'enveloppe, comprenant un pot (1) d'enveloppe et un élément (3) de filtre, qui a une matière (5) filtrante s'étendant entre deux coiffes (7, 9) d'extrémité, dont l'une des coiffes (7) a une poignée (37) pour mettre en remplacement l'élément (3) de filtre dans le pot (1) d'enveloppe en une position de fonctionnement, dans lequel il y a sur le côté frontal libre du pot (1) d'enveloppe un dispositif (27) de commande, qui coopère avec au moins un moyen (43) de commande présent sur la coiffe (7) d'extrémité ayant la poignée (37) de manière à ce qu'en tournant l'élément (3) de filtre respectif, au moyen de la poignée (37) dans un sens le sortant d'une position fixée dans le pot (1) de l'enveloppe, s'applique, à cet élément (3) de filtre, une force d'extraction agissant axialement, qui provoque, au moins en partie, le soulèvement de l'élément (3) de filtre hors du pot (1) d'enveloppe, le dispositif de commande ayant un profil (27) en dents de scie, dont les diverses dents (29) constituent chacune à partir d'un fond (31) de dent une rampe (33) s'étendant de manière inclinée en direction de l'extérieur, la rampe (33) s'abaissant à son extrémité en le fond (31) de dent suivant au sein du profil (27) en dents de scie, et dans lequel le profil (27) en dents de scie, constitue un anneau en soi fermé, **caractérisé en ce que** dans l'anneau les diverses rampes (33) se confondent sans solution de continuité et sans distance à partir de leur fond (31) de dent respectif.

2. Dispositif suivant la revendication 1 ou 2, **caractérisé en ce que** le profil (27) en dents de scie constitue des rampes (33) constituées pareillement, de même pente et même hauteur de rampe.

3. Dispositif suivant l'une des revendications précédentes, caractérisé en que l'une des coiffes (7) d'extrémité ayant la poignée (37) a, sur ses côtés opposés diamétralement l'un à l'autre, respectivement un moyen (43) de commande, qui fait saillie du bord (47) de pourtour, d'un dépassement pouvant être donné à l'avance.

4. Dispositif suivant l'une des revendications précédentes, **caractérisé en ce que** le moyen (43) respectif de commande a sur son côté inférieur tourné vers le profil (27) en dents de scie, une surface (51) de guidage, ayant une inclinaison qui correspond à l'inclinaison de la rampe (33) respective s'étendant de manière inclinée.

5. Dispositif suivant l'une des revendications précédentes, **caractérisé en ce que**, dans l'état où l'élément (3) de filtre respectif est inséré complétement dans le pot (1) d'enveloppe, le moyen (43) respectif de commande de l'une des coiffes (7) d'extrémité s'appuie sur la surface (35) de contact se raccordant au fond (31) de la dent et sur la rampe (33) associée du profil (27) en dents de scie.

6. Dispositif suivant l'une des revendications précédentes, **caractérisé en ce que** la surface (35) respective de contact du profil (27) en dents de scie s'étend sur le pot (1) d'enveloppe parallèlement à la direction d'extraction de l'élément (3) de filtre respectif.

7. Dispositif suivant l'une des revendications précédentes, **caractérisé en ce que**, lorsque l'élément (3) de filtre est inséré complètement dans le pot (1) d'enveloppe, le côté supérieur du moyen (43) respectif de commande est sensiblement à affleurement avec l'extrémité supérieure de la surface (35) de contact au point de la transition avec le flanc de profil suivant.

8. Dispositif suivant l'une des revendications précédentes, **caractérisé en ce que** sur l'autre coiffe (9) d'extrémité de l'élément (9) de filtre est monté, du côté du pourtour extérieur, un dispositif (19) d'étanchéité qui, lorsque l'élément (3) de filtre est à l'état inséré, vient en contact étanche avec le pot (1) d'enveloppe.

9. Dispositif suivant la revendication 8, **caractérisé en ce que** le dispositif (19) d'étanchéité est monté sur une saillie (17), de type en embout, de l'autre coiffe (9) d'extrémité et **en ce que** cette saillie (17) pénètre, lorsque l'élément (3) de filtre est à l'état inséré, dans une partie (15) de fermeture, rétrécie en diamètre par rapport au diamètre du reste du pot (1) d'enveloppe.

10. Dispositif suivant la revendication 8 ou 9, **caractérisé en ce que** la hauteur de rampe du profil (27) en dents de scie est choisie de manière à ce que, lorsque l'élément (3) de filtre sort en se soulevant, le dispositif (19) d'étanchéité de l'autre coiffe (9) d'extrémité vienne sensiblement hors de prise avec le pot (1) d'enveloppe.

11. Dispositif suivant l'une des revendications précédentes, **caractérisé en ce que** la poignée sur la une coiffe (7) d'extrémité est un étrier (37) pivotant et pouvant être actionné à la main, qui est guidé par ses deux extrémités libres dans des logements de pivotement dans les deux moyens (43) de commande opposés.

12. Dispositif suivant la revendication 11, **caractérisé en ce que**, dans l'état non actionné, l'étrier (37) est pivoté sur le côté supérieur de la coiffe (7) d'extrémité et vient en dessous d'un plan, qui passe conjointement par les deux côtés supérieurs des deux moyens (43) de commande.

13. Dispositif suivant la revendication 11 ou 12, **caractérisé en ce que** la coiffe (7) d'extrémité, ayant l'étrier (37) comme poignée, a un prolongement (39) de type en embout, qui porte, du côté du pourtour extérieur, un autre dispositif (41) d'étanchéité et **en ce que** dans chaque position de pivotement de l'étrier (37) le prolongement est maintenu sans contact avec celui-ci.

14. Dispositif suivant l'une des revendications précédentes, **caractérisé en ce que** le profil (27) en dents de scie se raccorde à la manière d'une âme et d'une seule pièce à l'extrémité libre du pot (1) d'enveloppe, qui a ensuite un filetage (53) extérieur, sur lequel une partie de tête de l'enveloppe peut être fixée en se vissant au pot (1) d'enveloppe.

15. Dispositif suivant l'une des revendications précédentes, **caractérisé en ce que** la largeur d'âme du profilé (27) en dents de scie est choisie de manière **en ce que**, dans chaque position de fixation de l'élément (3) de filtre dans le pot (1) d'enveloppe, les moyens (43) de commande, à sa coiffe (7) d'extrémité, n'ont, considéré dans la direction radiale, pas de dépassement.
